# EUROPEAN PATENT APPLICATION

(11) **EP 4 653 703 A1**
(43) Date of publication of application: **26.11.2025**
(21) Application number: 25178020.1
(22) Date of filing: 21.05.2025
(51) Int. Cl.: F04D 19/04, F04D 29/08, F04D 29/60, F04D 29/66, H01J 49/24, F16J 15/00, F16L 23/18

(54) **DIFFERENTIALLY PUMPED VIBRATION ISOLATOR**

(30) Priority: 24.05.2024 GB 202407384
(71) Applicant: Edwards Limited, Burgess Hill, Sussex RH15 9TW (GB)
(72) Inventor: COBBETT, Andrew, Burgess Hill, RH15 9TW (GB); SMITH, Paul David, Burgess Hill, RH15 9TW (GB)
(74) Representative: Totman, Clare Elizabeth

(57) **Abstract**

A vibration isolator 10 for connecting between a recipient 200 and a vacuum pump 100. The vibration isolator 10 has a collar 12 with a first face, and a second face opposite to the first face; a first decoupling element 24a positioned on the first face; a second decoupling element 24b positioned on the first face and about the first decoupling element 24a and a third decoupling element 24c positioned on the second face, wherein each decoupling element is configured to seal against one of the recipient 200 and the vacuum pump 100. The collar 12 has a differential pumping channel 26a located between the first decoupling element 24a and the second decoupling element 24b.

## Description

### FIELD OF INVENTION

The present invention relates to a vibration isolator for a vacuum system, including but not limited to vacuum systems for mass spectrometers.

### BACKGROUND

Mass spectrometers require low operating pressures to reduce the probability of ion collisions. Vacuum pumps, such as but not limited to turbomolecular vacuum pumps, are used to provide and maintain these reduced gas pressures in mass spectrometer analyser chambers.

During operation, vacuum pumps emit vibrations induced by rotating or other moving parts. These may be high frequency vibrations, for example in the range of 10 kHz to 50 kHz. These vibrations may be transmitted through the system, for example via pipes and connectors, to the analyser chamber of the mass spectrometer. Mass spectrometers are sensitive to vibrations, which may corrupt the analysis spectra and reduce the overall lifetime of the instrument.

It has been shown that transmission of vibrations to the mass spectrometer analysis chamber may be reduced by addition of conventional vibration isolator accessories between the vacuum pump and the mass spectrometer analysis chamber. Such conventional vibration isolators are bulky and thus, due to their size, in many cases their use is not feasible within systems driving towards reduced instrument footprint.

Furthermore, in many circumstances, the sealing between the vacuum pump and the mass spectrometer analysis chamber must be differentially pumped, to achieve lower ultimate pressures in the analysis chamber. Conventional vibration isolators are not suitable for use in such mass spectrometer systems.

The present invention provides an improved vibration isolator for use in, but not limited to, mass spectrometer systems.

EP2918843A1 is concerned with a vacuum pump damper for the vacuum-tight connection of a vacuum pump to a recipient. US2011254263A1 is concerned with a vibration damper of a turbomolecular pump with a vacuum tightness function and a vibration damping function performed by one or more toroidal rings made of an elastic material. GB2552324A is concerned with a vibration damper connector system containing a resilient member.

### SUMMARY OF THE INVENTION

In a first aspect, the present invention provides a vibration isolator for connecting between a recipient and a vacuum pump, the isolator comprising a collar comprising a first face and a second face opposite to the first face, a first decoupling element positioned on the first face, a second decoupling element positioned on the first face and about the first decoupling element and a third decoupling element positioned on the second face, each decoupling element being configured to seal against one of the recipient and the vacuum pump, characterised in that the collar further comprises a first differential pumping channel located between the first decoupling element and second decoupling element.

The present invention defines a vibration isolator specially adapted for differential pumping of a vacuum system, including but not limited to vacuum systems for mass spectrometers. This advantageously provides a single component or accessory capable of both vibration isolation, between a vacuum pump and a recipient, and differential pumping of an interface between said vacuum pump and recipient. This in turn provides a vibration isolator suitable for use in mass spectrometers, and other systems, where differential pumping is required to achieve low ultimate pressures. This advantageously acts to reduce the number of components required within the system. In systems requiring vertical installation of pumps, this in turn tends to reduce the overall installation height. Additionally, a reduced number of components also tends to reduce the number of interfaces between the vacuum pump and the recipient, further reducing the risk of leakage into the system. Thus, efficiency of the vacuum system tends to be further improved. Moreover, the reduction in components tends to provide for a cost-effective solution for providing both vibration isolation and differential pumping.

The collar defines an aperture for allowing fluid flow between the recipient and the vacuum pump. The recipient may be in the form of an analysis chamber for a mass spectrometer, but it should be appreciated that the collar may be attached to other forms of recipient, such as but not limited to an electron microscope, a semiconductor process chamber or a leak detector. Preferably the collar adopts a diameter compatible with standard ISO flange sizes. This advantageously supports use of the vibration isolator in systems which adopt ISO standard connections. Preferably the collar is metal, more preferably stainless steel or aluminium.

The function of the differential pumping channel is to inhibit gas permeation into the vacuum system from the external ambient environment. The first differential pumping channel is preferably continuous and more preferably substantially annular. The radial width of said differential pumping channel may vary along its length, but preferably the radial width is constant along the length of the channel. Similarly, the longitudinal depth of said differential pumping channel may vary along its length. It is noted that the deeper the differential pumping channel, the greater the differential pumping effect.

In a preferred embodiment, the vibration isolator may comprise a fourth decoupling element positioned on the second face and about the third decoupling element. Preferably, a second differential pumping channel is positioned on the second face of the collar between the third and fourth decoupling elements. The second differential pumping channel is preferably continuous and more preferably substantially annular. The radial width of this differential pumping channel may vary along its length, but preferably the radial width is constant along the length of the channel. Similarly, the longitudinal depth of said differential pumping channel may vary along its length.

Preferably, where differential pumping channels, as previously described, exist on both the first and second faces of the collar, said first and second differential pumping channels are connected via at least one sub-channel, to form a network of differential pumping channels extending from between the first and second decoupling elements to between the third and fourth decoupling elements. The or each sub-channel preferably extends parallel to the longitudinal axis. Where a plurality of sub-channels exists, each sub-channel preferably extends partially along a circle centered on the longitudinal axis of the collar.

This advantageously allows for differential pumping at both the interface between the vibration isolator and the vacuum pump and the interface between the vibration isolator and the recipient. This in turn inhibits leakage across both sealing interfaces and all decoupling elements, thus further improving the efficiency of the vacuum system and ultimate pressure achievable in the recipient. Furthermore, the network of differentially pumped channels allows for differential pumping at both interfaces via a single vacuum pump. This may in turn reduce the number of vacuum pumps required within the system, advantageously reducing the system cost and footprint.

Preferably, the first and second decoupling elements are positioned coaxially about the longitudinal axis of the collar. The first face of the collar may comprise a first groove and a second groove, positioned about the first groove, to guide positioning of the first and second decoupling elements. Preferably the first and second grooves are substantially annular and are positioned coaxially about the longitudinal axis of the collar.

The second face of the collar may comprise a third groove to guide positioning of the third decoupling element. The second face of the collar may also comprise a fourth groove to guide positioning of the fourth decoupling element. Preferably, the third and fourth grooves are substantially annular and are positioned coaxially about the longitudinal axis of the collar, such that the third and fourth decoupling elements are positioned coaxially about the longitudinal axis of the collar. More preferably, the third groove is positioned directly opposite the first groove and the fourth groove is positioned directly opposite the second groove, such that the positions of the third and fourth decoupling elements are directly opposite to those of the first and second decoupling elements respectively.

The decoupling elements function to provide a seal between the collar and respective interfaces with the recipient and vacuum pump. Preferably, the decoupling elements are substantially annular, more preferably with a circular cross-section, though the cross-section may take any reasonable alternative geometry, such as but not limited to elliptical, square, rectangular or x-shaped. The decoupling elements are more preferably o-rings. These decoupling elements may comprise an elastomeric material, preferably nitrile and more preferably natural rubber. Such materials exhibit favourable damping properties which advantageously act to increase the damping effect of the vibration damper.

The grooves act to guide positioning of the decoupling elements, whilst advantageously acting to maintain this position during assembly of the system. This in turn tends to mitigate against human error during installation of the vibration isolator.

In a preferred embodiment, the collar may comprise a port positioned on an outer side face, wherein the port is in fluid connection with the differential pumping channel or network of differential pumping channels. This advantageously allows for the differential pumping vacuum source to be connected directly to the collar, eliminating requirements for any differential pumping channels within the pump or recipient. This allows for the vibration isolator of the present invention to be applied to existing systems as a solution to the aforementioned problems.

The collar may comprise at least one first connector element for connecting the collar to the vacuum pump. In a preferred embodiment, the collar comprises at least four first connector elements, preferably positioned radially outwardly of the decoupling elements, and preferably arranged in an annular array centred on the longitudinal axis of the collar. More preferably the first connector elements are equi-angularly spaced within the array to provide even clamping. The or each first connector element may comprise a bore for receiving a first connector for attaching the collar to the inlet flange. In a preferred embodiment the bore is a threaded bore. Preferably the bore extends through the entire depth of the collar but alternatively the bore may extend only partway through the depth of the collar. The first connector may be any suitable connector, including but not limited to a bolt, a rotatable flange, a full claw connector or a half claw connector. In a preferred embodiment, the first connector is a half claw connector.

The collar may comprise at least one second connector element for connecting the collar to the recipient. In a preferred embodiment, the collar comprises at least four second connector elements, preferably positioned radially outwardly of the decoupling elements, and preferably arranged in an annular array centred on the longitudinal axis of the collar. Preferably the second connector elements are equi-angularly spaced within the array to provide even clamping. The or each second connector element may comprise a bore for receiving a second connector and a recess coaxial with the bore for receiving a damping block extending about the second connector. Preferably the second connector comprises a bolt with a damping block positioned about the bolt shaft, such that during use the damping block is positioned between the bolt head and the respective face of the collar. The damping block is preferably a polymeric material, preferably rubber and more preferably natural rubber. Such materials exhibit favourable damping properties which advantageously act to further increase the damping effect of the vibration damper. The second connector may further comprise a washer positioned between the bolt head and the damping element to evenly distribute the clamping pressure to the damping block.

The recess allows placement of the damping block which prevents metal-to-metal contact between the connector and the collar, further preventing transmission of vibrations from the pump to the recipient via the collar. Furthermore, by adopting a first connector element and a second connector element, a continuous connector extending between the pump and the recipient is avoided. This in turn advantageously acts to safeguard against vibration transmissions by removal of direct paths between the pump and the recipient.

During operation, the decoupling elements are compressed due to the pressure differential between the system and the external environment, causing the damping blocks within the second connector to expand. This acts to compensate for compression of the decoupling elements, thus maintaining a tight and secure connection between the collar and recipient and collar and vacuum pump during operation. This advantageously safeguards against variations in security of the connections when the vacuum pump switches between operating and non-operating states.

It should be appreciated that the second connector may take alternative forms, provided a secure connection is achievable.

A second aspect of the present invention provides a vacuum apparatus comprising a vacuum pump having an inlet flange, a recipient having an outlet flange and the vibration isolator, as previously described, located between the inlet flange of the vacuum pump and the outlet flange of the recipient. In a preferred embodiment, the vacuum pump is a turbomolecular vacuum pump.

Preferably, the collar of the vibration isolator adopts the same standard ISO flange size as at least one of the recipient outlet flange or the vacuum pump inlet flange. More preferably the collar adopts the same standard ISO flange size as both the recipient outlet flange and the vacuum pump inlet flange, such that the diameter of the collar aperture is approximately equal to the diameter of the recipient outlet aperture and the diameter of the vacuum pump inlet aperture. This minimises the effect of conductance losses through the collar, which would ultimately reduce the vacuum pumping efficiency.

The recipient may contain a differential pumping channel and the vibration isolator is preferably positioned such that the differential pumping channel of the recipient is in fluid connection with the differential pumping channel or network of differential pumping channels of the vibration isolator.

The differential pumping channel of the recipient may be connected to the vacuum pump. This advantageously eliminates any requirement for an additional pump to achieve the differential pumping, reducing the number of pumps in the system. This in turn reduces the system footprint and cost. It should be noted that the differential pumping channel of the recipient may however be connected to a second pump if required.

The differential pumping channel or network of differential pumping channels of the vibration isolator may be connected to a vacuum pump via the port positioned on the side surface of the collar. This advantageously allows for the differential pumping vacuum source to be connected directly to the collar, eliminating requirements for any differential pumping channels within the pump or recipient. This allows for the vibration isolator of the present invention to be applied to existing systems, with minimal modification of existing components.

In a further embodiment, the vacuum apparatus may comprise an adaptor for connecting the vibration isolator to the outlet flange or the inlet flange. The adaptor is preferably provided with connector elements capable of receiving the respective first and/or second connectors of the vibration isolator. The adaptor may include similar features to the vibration isolator, for example, the adaptor may include at least one differential pumping channel and a gas port in fluid connection with said differential pumping channel.

### BRIEF DESCRIPTION OF THE DRAWINGS

Embodiments of the present invention will now be described in detail with reference to the accompanying drawings, in which:
Figure 1 illustrates a cross-sectional view of a vacuum apparatus according to an embodiment;
Figure 2 illustrates a cross-sectional view of a vacuum apparatus according to an alternative embodiment;
Figure 3 illustrates a cross-sectional view of a vacuum apparatus according to another alternative embodiment;
Figure 4 illustrates a preferred means for connecting a vibration isolator within the vacuum apparatus of Figure 3;
Figure 5 illustrates a cross-sectional view of a collar of the vibration isolator of Figure 3;
Figure 6 illustrates the first face of the collar;
Figure 7 illustrates the second face of the collar;
Figure 8 illustrates an alternative means for connecting a vibration isolator within a vacuum apparatus using an adaptor; and
Figure 9 illustrates a cross-sectional view of the vacuum apparatus of Figure 8.

### DETAILED DESCRIPTION OF THE DRAWINGS

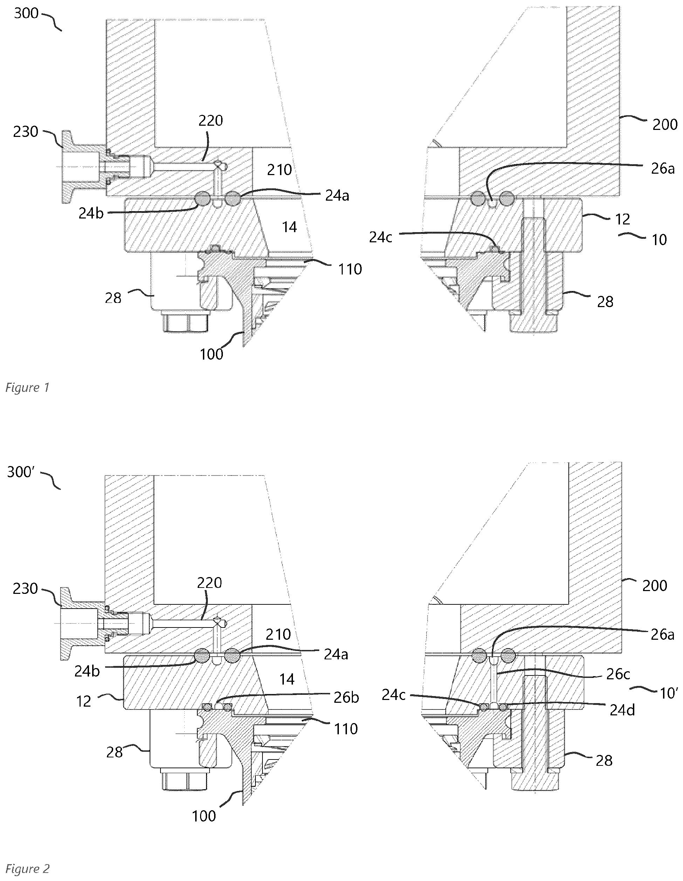

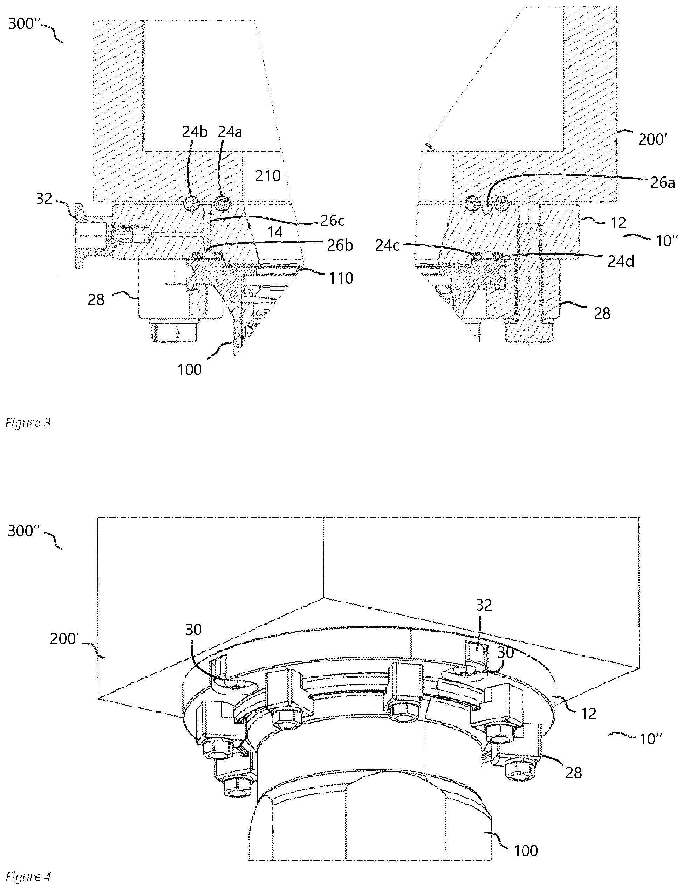

Figure 1 illustrates a cross section through a vacuum apparatus 300 comprising a vibration isolator 10. The vibration isolator 10 is connected between the vacuum pump 100 and the recipient 200 via a plurality of first connectors 28 and second connectors 30, as illustrated in Figure 4.

The vibration isolator comprises a collar 12 and a plurality of decoupling elements 24a, 24b, and 24c, for sealing the interfaces between the collar 12, the recipient 200 and the vacuum pump 100, whilst also absorbing vibrations from the vacuum pump 100. The first decoupling element 24a and second decoupling element 24b are positioned between the first face of the collar 12 and the recipient 200. The second decoupling element 24b is positioned about the first decoupling element 24a. The third decoupling element 24c is positioned between the second face of the collar 12 and the vacuum pump 100.

The collar 12 comprises an aperture 14 and a first differential pumping channel 26a. The collar 12 is positioned such that the aperture 14 aligns with the vacuum pump inlet 110 and the recipient outlet 210, such that the recipient 200 is in fluid connection with the vacuum pump 100 via the aperture 14.

In this embodiment, the recipient 200 contains a recipient differential pumping channel 220 and a recipient gas port 230 in fluid connection with said recipient differential pumping channel 220. A vacuum pump is connected to the recipient gas port 230 for evacuating the recipient differential pumping channel 220. The collar 12 is positioned such that the recipient differential pumping channel 220 is in fluid connection with the first differential pumping channel 26a of the collar 12.

The vacuum pump 100 contains a rotor, driven by a motor, which alongside other moving components of the pump, emit vibrations during operation. In use, gas is pumped from the recipient 200 by the vacuum pump 100 via the aperture 14. This results in a negative pressure within the vacuum apparatus 300, the recipient 200, the recipient outlet 210, the aperture 14 and the vacuum pump inlet 110. This negative pressure causes the vacuum pump 100 to shift in the direction towards the recipient 200, compressing the decoupling elements 24a, 24b, 24c such that they absorb vibrations from the vacuum pump 100 and form a seal to prevent gas leaking from the external ambient environment into the vacuum apparatus 300.

Leakage is further improved by differential pumping of the interface between the collar 12 and the recipient 200. Gas is pumped out of the recipient differential pumping channel 220 and first differential pumping channel 26a via the vacuum pump connected to the recipient gas port 230, such that the pressure within the first differential pumping channel 26a falls to somewhere between the pressure of the vacuum apparatus 300 and the pressure of the external ambient environment. This reduces the pressure differential across the first decoupling element 24a and second decoupling element 24b, which in turn reduces leakage into the system. The inclusion of the first differential pumping channel 26a therefore advantageously acts to inhibit leakage across the interface between the collar 12 and the recipient 200, improving the efficiency of the vacuum apparatus 300 and ultimate pressure achievable within the recipient 200.

Figure 2 illustrates a cross section through a vacuum apparatus 300' comprising an alternative embodiment of the vibration isolator 10', in which the vibration isolator 10' comprises a fourth decoupling element 24d and a network of differential pumping channels comprising a first differential pumping channel 26a on the first face of the collar 12, a second differential pumping channel 26b on the second face of the collar 12 and a plurality of sub-channels 26c. Features of the vibration isolator 10', vacuum pump 100 and recipient 200 which are identical to that of the vibration isolator 10, vacuum pump 100 and recipient 200 as described in Figure 1 have been indicated using the same reference numerals and will not be described again here. The vibration isolator 10' is connected between the vacuum pump 100 and the recipient 200 as described in Figure 1 via a plurality of first connectors 28 and second connectors 30, as illustrated in Figure 4.

The fourth decoupling element 24d is positioned about the third decoupling element 24c and between the second face of the collar 12 and the vacuum pump 100. The first differential pumping channel 26a is positioned between the first decoupling element 24a and second decoupling element 24b on the first face. The second differential pumping channel 26b, is positioned between the third decoupling element 24c and fourth decoupling element 24d on the second face. The sub-channels 26c extend from between the first differential pumping channel 26a to between the second differential pumping channel 26b. All differential pumping channels 26a, 26b are in fluid connection with one another via the sub-channels 26c to form the single network of differential pumping channels.

In use, gas is pumped out of the differential pumping channels 26a, 26b via the recipient differential pumping channel 220 by the vacuum pump connected to the recipient gas port 230. The pressure within the differential pumping channels 26a, 26b falls somewhere between the pressure in the aperture 14 and the pressure of the external ambient environment, reducing the pressure differential across each of the decoupling elements, which in turn reduces leakage into the system. Inclusion of the fourth decoupling element 24d, the second differential pumping channel 26b and plurality of sub-channels 26c therefore advantageously acts to inhibit leakage across both sealing interfaces of the vibration damper 10'. This acts to improve the efficiency of the vacuum apparatus 300' and ultimate pressure achievable within the recipient 200.

Figure 3 illustrates a cross section through a vacuum apparatus 300" comprising an alternative embodiment of the vibration isolator 10' illustrated in Figure 2. Features of the vibration isolator 10", vacuum pump 100 and recipient 200' which are identical to that of the vibration isolators 10, 10', vacuum pump 100 and recipient 200, as described in Figures 1 and 2, have been indicated using the same reference numerals and will not be described again here. The vibration isolator 10" is connected between the vacuum pump 100 and the recipient 200' as described via a plurality of first connectors 28 and second connectors 30, as illustrated in Figure 4.

In this embodiment, the collar 12 comprises a gas port 34, configured to be in fluid connection with the differential pumping channels 26a, 26b. In particular, the gas port 34 connects directly to the sub-channel 26c. The gas port 34 is connected to a vacuum pump.

In use, gas is pumped out of the differential pumping channels 26a, 26b by a vacuum pump connected to the gas port 34, such that the pressure in the differential pumping channels 26a, 26b falls to somewhere between the pressure in the aperture 14 and the pressure of the external environment. As previously described, this reduces leakage into the vacuum apparatus 300" and improves the ultimate pressure achievable within the recipient 200'. Inclusion of the gas port 34 in the collar 12 allows for differential pumping of the vacuum apparatus 300" when the recipient 200' does not contain a recipient differential pumping channel 220 or recipient gas port 230.

Figure 4 illustrates a preferred means for connecting the vibration isolator 10" to the vacuum apparatus 300", and which is used to connect any of the aforementioned vibration isolators to vacuum apparatus. The collar 12 is connected to the vacuum pump 100 via a plurality of first connectors 28 and to the recipient 200' via a plurality of second connectors 30. In this embodiment the first connectors 28 are half-claw type connectors and the second connectors 30 comprise a bolt, a washer and a damping block 32.

The first connectors 28 do not contact the recipient 200', hence transmission of vibrations from the vacuum pump 100 to the recipient 200' directly via the first connectors 28 is prevented. Similarly, the second connectors 30 do not contact the vacuum pump 100, hence transmission of vibrations from the vacuum pump 100 to the recipient 200' directly via the second connectors 30 is prevented. The damping blocks 32 act to prevent metal-to-metal contact between the second connectors 30 and the collar 12, further preventing transmission of vibrations from the vacuum pump 100 to the recipient 200' via the second connectors 30.

As described previously with reference to Figure 1, in use the vacuum pump 100 shifts in the direction towards the recipient 200' due to the negative pressure within the vacuum apparatus 300". This results in compression of the decoupling elements 24a-d and expansion of the damping blocks 32. The compressed decoupling elements 24a-d absorb vibrations from the vacuum pump 100 whilst maintaining a seal to minimise leakage of gas from the external ambient environment into the vacuum apparatus 300". The expanded damping blocks 32 compensate for compression of the decoupling elements 24a-d to maintain secure connections between the collar 12, the vacuum pump 100 and the recipient 200' during operating of the vacuum pump 100. This further mitigates against transmission of vibrations from the vacuum pump 100 to the recipient 200', as well as leakage of gas from the external ambient environment into the vacuum apparatus 300". When the vacuum pump 100 is switched off, the pressure within the vacuum apparatus 300" may rise, causing the decoupling elements 24a-d to decompress. The damping blocks 32 expand to compensation for any decompression of the decoupling elements 24a-d, maintaining secure connections between the collar 12, the vacuum pump 100 and the recipient 200' when the vacuum pump 100 is not in operation.

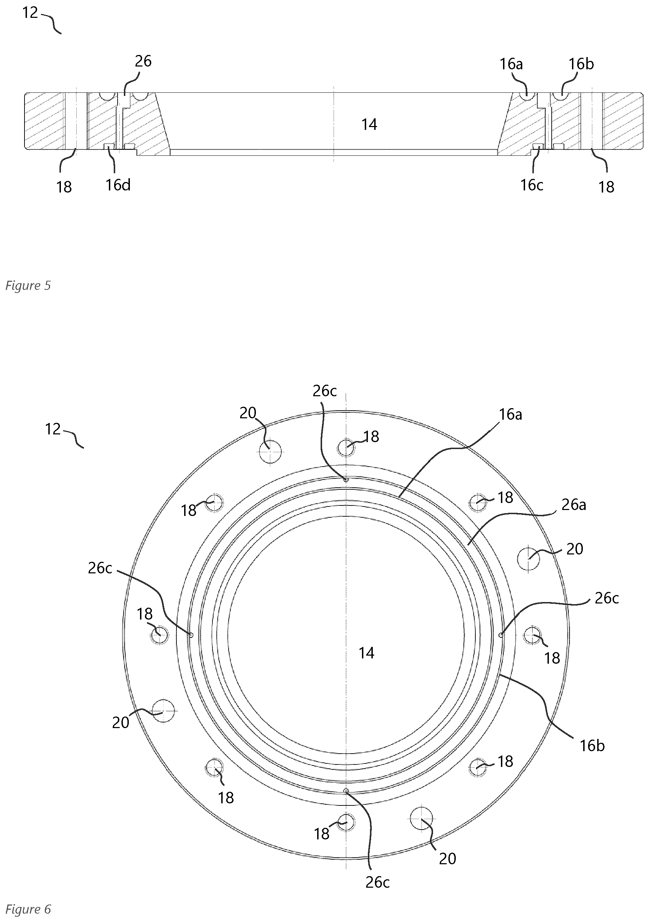

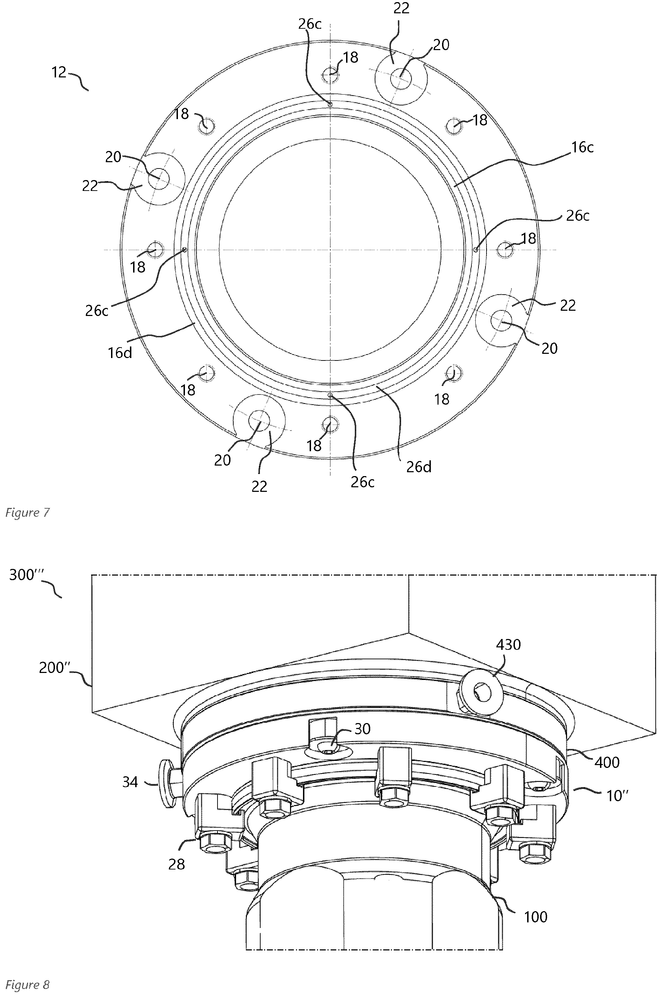

Figure 5 illustrates a cross section through the longitudinal axis of the collar 12. The collar 12 defines an aperture 14 through which fluid flows and comprises; first, second, third and fourth substantially annular grooves 16a-d respectively, for guiding positioning of the first, second, third and fourth decoupling elements 24a-d respectively; a plurality of first connector elements 18, each for receiving a first connector 28; and differential pumping channels 26a, 26b for differential pumping of the interfaces between the collar 12, the recipient 200' and the vacuum pump 100. The collar further comprises a plurality of second connector elements 20, each for receiving a second connector 30, as illustrated in Figures 6 and 7.

In use the collar 12 is connected between a vacuum pump 100 and a recipient 200', as shown in Figures 1 to 4. During assembly of the vacuum apparatus 300", decoupling elements are positioned within each of the grooves 16a-d. More specifically, a third decoupling element 24c and a fourth decoupling element 24d are positioned within the grooves 16c and 16d respectively. The second face of the collar 12 is then positioned against the vacuum pump 100 and connected via a plurality of first connectors 28, each positioned within one of the plurality of first connector elements 18. A first decoupling element 24a and a second decoupling element 24b are then positioned within the grooves 16a and 16b respectively. The first face of the collar 12 is then positioned against the recipient 200' and connected via a plurality of second connectors 30, each positioned within one of the plurality of second connector elements 20.

Figure 6 illustrates the first face of the collar 12. The first face comprises a plurality of first connector elements 18, each for receiving first connectors 28; a plurality of second connector elements 20, each for receiving second connectors 30; a first groove 16a, for receiving a first decoupling element 24a; a second groove 16b for receiving a second decoupling element 24b; a first differential pumping channel 26a and a plurality of sub-channels 26c (as described in Figure 2). The first differential pumping channel 26a and plurality of sub-channels 26c are positioned between the first groove 16a and second groove 16b, for allowing differential pumping between the first decoupling element 24a and second decoupling element 24b.

Figure 7 illustrates the second face of the collar 12. The second face comprises a plurality of first connector elements 18, each for receiving first connectors 28 and a plurality of second connector elements 20, each for receiving second connectors 30. The second connector element 20 comprises a cavity 22 for receiving a damping block 32 positioned on the second connector. The second face of the collar 12 further comprises a third groove 16c for receiving a third decoupling element 24c; a fourth groove 16d for receiving a fourth decoupling element 24d; a second differential pumping channel 26b and the plurality of sub-channels 26c (as described in Figure 2). The second differential pumping channel 26b and plurality of sub-channels 26c are positioned between the third groove 16c and fourth groove 16d, for allowing differential pumping between the third decoupling element 24c and fourth decoupling element 24d.

It should be appreciated that the collar 12 may contain a gas port 34 in fluid connection with the differential pumping channels 26a, 26b, via a sub-channel 26c, as illustrated in Figure 3.

Figure 8 illustrates an alternative means for connecting the vibration isolator 10" within a vacuum apparatus 300‴ using an adaptor 400, which may also be used to connect any of the aforementioned vibration isolators to vacuum apparatus. The vibration isolator 10" is connected to the vacuum pump 100 via a plurality of first connectors 28 and to the adaptor 400 via a plurality of second connectors 30. The adaptor 400 may be connected to the recipient 200" via an appropriate fastening means.

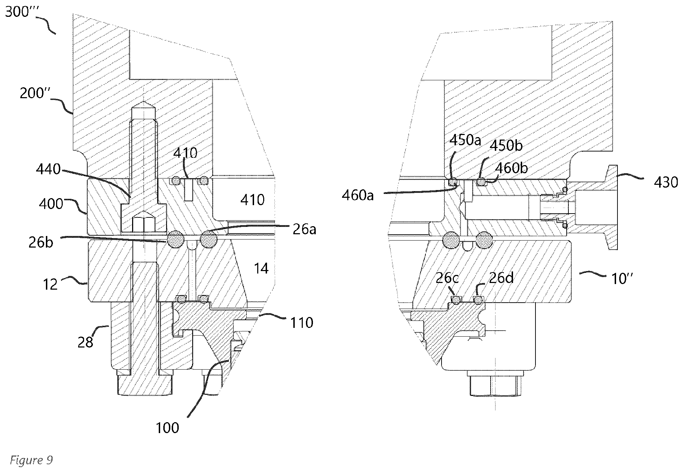

Figure 9 illustrates a cross section of the alternative means for connecting the vibration isolator 10" within the vacuum apparatus 300‴ using the adaptor 400, as described in Figure 8. In this embodiment, the adaptor 400 comprises similar features to the vibration isolator 10", including; an aperture 410, an adaptor differential pumping channel 420, an adaptor gas port 430 in fluid connection with the adaptor differential pumping channel 420, adaptor connector elements 440, first adaptor decoupling element 450a, second adaptor decoupling element 450b and grooves 460a and 460b on the first face for receiving the decoupling elements 450a and 450b. The adaptor 400 may also contain a pair of grooves on the second face for receiving the first decoupling element 24a and second decoupling element 24b of the vibration isolator 10". The aperture 410 may be stepped or tapered along its depth, to transition the gas path from the recipient 200" to the vacuum pump 100 with minimal conductance loss.

In use, the adaptor 400 is positioned between the vibration isolator 10" and the recipient 200" such that the aperture 410 aligns with the recipient outlet 210 and aperture 14 of the vibration isolator, to allow gas to flow from the recipient 200" to the vacuum pump 100. The adaptor 400 is also positioned such that the adaptor differential pumping channel 420 aligns with the first differential pumping channel 26a of the vibration isolator 10" and the recipient differential pumping channel 220, if present, such that all differential pumping channels are in fluid connection and may be evacuated by a single vacuum pump.

It should be appreciated that the adaptor 400 may instead be used to connect the vibration isolator 10" and the vacuum pump 100. The vibration isolator 10" may be connected to the recipient 200" via a plurality of second connectors 30 and to the adaptor 400 via a plurality of first connectors 28. Said adaptor 400 is connected to the vacuum pump 100 via an appropriate fastening means. In such circumstances, the first adaptor decoupling element 450a, second adaptor decoupling element 450b and grooves 460a and 460b will be located on the second face and the adaptor 400 may also contain a pair of grooves on the first face for receiving the third decoupling element 24c and fourth decoupling element 24d of the vibration isolator 10". The adaptor 400 will be positioned between the vibration isolator 10" and the vacuum pump 100 in a similar way as previously described, such that the aperture 410 aligns with the aperture 14 of the vibration isolator 10" and the vacuum pump inlet 110, and the adaptor differential pumping channel 420 aligns with the second differential pumping channel 26b of the vibration isolator 10".

Although several embodiments of the invention have been described in detail with reference to Figures 1 - 9, it is understood that the invention is not limited to these precise embodiments and that various modifications may be made by the skilled person without departing from the scope of the invention as claimed herein. For example, the embodiments presented in the figures contain a total of eight first connector elements 18 and a total of four second connector elements 20, however any number of connector elements may be used provided at least one first connector element 18 and at least one second connector element 20 are included. The vacuum pump connected to the gas port 34 and/or recipient gas port 230 may be the vacuum pump 100 or an additional vacuum pump forming part of the vacuum apparatus. Adaptors may be used to connect the vibration isolator to both the recipient and the vacuum pump.

### REFERENCE NUMERALS

- 10, 10', 10": vibration isolator
- 12: collar
- 14: aperture
- 16a: first groove
- 16b: second groove
- 16c: third groove
- 16d: fourth groove
- 18: first connector elements
- 20: second connector element
- 22: cavity
- 24a: first decoupling element
- 24b: second decoupling element
- 24c: third decoupling element
- 24d: fourth decoupling element
- 26a: first differential pumping channel
- 26b: second differential pumping channel
- 26c: sub-channel
- 28: first connector
- 30: second connector
- 32: damping block
- 34: gas port
- 100: vacuum pump
- 110: vacuum pump inlet
- 200, 200', 200": recipient
- 210: recipient outlet
- 220: recipient differential pumping channel
- 230: recipient gas port
- 300, 300', 300", 300‴: vacuum apparatus
- 400: adaptor
- 410: adaptor aperture
- 420: adaptor differential pumping channel
- 430: adaptor gas port
- 440: adaptor connector elements
- 450a: first adaptor decoupling element
- 450b: second adaptor decoupling element
- 460a: first adaptor groove
- 460b: second adaptor groove

## Claims

1. A vibration isolator for connecting between a recipient and a vacuum pump, the vibration isolator comprising:
a collar comprising a first face, and a second face opposite to the first face,
a first decoupling element positioned on the first face,
a second decoupling element positioned on the first face and about the first decoupling element,
a third decoupling element positioned on the second face, wherein
each decoupling element is configured to seal against one of the recipient and the vacuum pump
**characterised in that** the collar further comprises a first differential pumping channel located between the first decoupling element and second decoupling element.

2. The vibration isolator of claim 1, wherein the first decoupling element and second decoupling element are positioned coaxially on the first face and about the longitudinal axis of the collar.

3. The vibration isolator of any preceding claim, comprising a fourth decoupling element positioned on the second face of the collar and about the third decoupling element, optionally wherein the third decoupling element and fourth decoupling element are positioned on the second face and coaxially about the longitudinal axis of the collar.

4. The vibration isolator of claim 3, comprising a second differential pumping channel located between the third decoupling element and fourth decoupling element.

5. The vibration isolator of claim 4, comprising at least one sub-channel extending from the first differential pumping channel to the second differential pumping channel, such that the first differential pumping channel is in fluid connection with the second differential pumping channel via the or each sub-channel, optionally wherein the collar comprises a gas port positioned on an outer side face of the collar, wherein the gas port is in fluid connection with at least one sub-channel.

6. The vibration isolator of any preceding claim, wherein the collar comprises grooves each for receiving and maintaining the position of a respective decoupling element.

7. The vibration isolator of any preceding claim, wherein the collar comprises at least one first connector element for connecting the collar to the vacuum pump, wherein the or each first connector element optionally comprises a bore for receiving a first connector for attaching the collar to the vacuum pump.

8. The vibration isolator of any preceding claim, wherein the collar comprises at least one second connector element for connecting the collar to the recipient, wherein the or each second connector element optionally comprises a bore for receiving a second connector and a cavity coaxial with the bore for receiving a damping block extending about the second connector.

9. A vacuum apparatus, comprising:
a vacuum pump having an inlet flange,
a recipient having an outlet flange and
the vibration isolator of any preceding claims located between the inlet flange of the vacuum pump and the outlet flange of the recipient, wherein the vacuum pump is optionally a turbomolecular vacuum pump.

10. The vacuum apparatus of claim 9, wherein the recipient contains a recipient differential pumping channel and the vibration isolator is positioned such that the recipient differential pumping channel is in fluid connection with the first differential pumping channel of the vibration isolator.

11. The vacuum apparatus of claim 9 or 10, wherein the recipient differential pumping channel and/or the differential pumping channels of the vibration isolator are connected to the vacuum pump via a recipient gas port.

12. The vacuum apparatus of claim 9 or 10, wherein the recipient differential pumping channel and/or the differential pumping channels of the vibration isolator are connected to a second pump via a recipient gas port.

13. The vacuum apparatus of claim 9 or 10 when dependent from claim 5, wherein the collar comprises a gas port positioned on an outer side face of the collar, wherein the gas port is in fluid connection with at least one sub-channel, and wherein the differential pumping channels of the vibration isolator and/or the recipient differential pumping channel is connected to the vacuum pump via the gas port.

14. The vacuum apparatus of claim 9 or 10 when dependent from claim 5, wherein the collar comprises a gas port positioned on an outer side face of the collar, wherein the gas port is in fluid connection with at least one sub-channel, and wherein the differential pumping channels of the vibration isolator and/or the recipient differential pumping channel is connected to a second pump via the gas port.

15. The vacuum apparatus of any of claims 9 to 14, comprising an adaptor for connecting the vibration isolator to the outlet flange of the recipient and/or an adaptor for connecting the vibration isolator to the inlet flange of the vacuum pump.
